(19) Europäisches Patentamt
European Patent Office
Office européen des brevets

(11) **EP 4 372 359 A1**

(12) **EUROPEAN PATENT APPLICATION**
published in accordance with Art. 153(4) EPC

(43) Date of publication:
**22.05.2024 Bulletin 2024/21**

(21) Application number: **23824132.7**

(22) Date of filing: **01.06.2023**

(51) International Patent Classification (IPC):
**G01N 3/08** (2006.01)

(52) Cooperative Patent Classification (CPC):
**G01N 3/08**

(86) International application number:
**PCT/KR2023/007530**

(87) International publication number:
**WO 2023/243914 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 KR 20220071405**

(71) Applicant: **LG Chem, Ltd.**
**Yeongdeungpo-gu**
**Seoul 07336 (KR)**

(72) Inventors:
• **MOON, Sung Nam**
  **Daejeon 34122 (KR)**

• **KIM, Hyun Tae**
  **Daejeon 34122 (KR)**
• **JEON, Sang Jin**
  **Daejeon 34122 (KR)**
• **JUNG, Jin Mi**
  **Daejeon 34122 (KR)**
• **CHOI, Jin Uk**
  **Daejeon 34122 (KR)**
• **IM, Dam Hyeok**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR PREDICTING STRENGTH OF MULTI-LAYERED MATERIAL**

(57) Disclosed herein provides a system and method for predicting the strength of a multilayer material having two or more films stacked thereto.

[FIG. 3]

## Description

[Technical Field]

This application claims the benefit of priority based on Korean Patent Application No. No. 10-2022-0071405, filed on June 13, 2022, the disclosure of which is incorporated herein by reference in its entirety.
The present invention relates to a system and method for predicting the strength of multilayer materials, and more specifically, multilayer films.

[Background Technology of the Invention]

Polymeric films refer to non-fibrous flat plastic moldings with a thickness of 0.25 mm or less. They are lightweight, have good barrier properties, excellent transparency, and are relatively inexpensive, and are used in almost every field, including packaging, household products, electronics, automobiles, and aircrafts.
However, there is a limitation that a single film alone cannot fulfill the complex properties required. In order to improve this, multilayer materials that are composed of two or more films stacked together are being developed.
In the process of developing multilayer materials, the properties of the multilayer material, especially the strength, cannot be derived by summing the properties of the individual films. Conventionally, in order to evaluate the properties, especially the strength, of multilayer materials, multilayer material specimens are manufactured for each combination and evaluations are performed on the manufactured specimens. This method of manufacturing multilayer material specimens has the limitation that it is not only time-consuming to manufacture multilayer material specimens, but also difficult to evaluate all the different types of films and their properties.
Therefore, there is a need for a method to predict the properties of multilayer materials, especially their strength, without directly manufacturing them.

[Description of the technology]

[Technical Problem]

As described above, the object of the present disclosure is to provide a system or method for predicting the properties of a multilayer material, in particular its strength, during a simulation phase.

[Technical Solution]

To achieve the above objectives, the present disclosure provides a strength prediction system for multilayer materials.
In an exemplary embodiment, the present invention relates to a strength prediction system for a multilayer material with n films stacked (where n is an integer greater than or equal to 2) including: an input portion where one or more of the following is entered: elastic modulus ($E^k$) of each layer (k), Poisson's ratio ($\upsilon^k$), Young's modulus ($G^k$), thickness ($Z^k$), stacking angle ($\theta^k$), principal stress direction strength ($[F]^k$), and total thickness (h) of the multilayer material; a control portion that calculates the strength of a multilayer material by applying the values entered in the input portion; a display connected to the control portion; and a storage portion connected to the control portion.
In addition, the control portion is configured to perform the following steps:

(a) calculate the stress of each layer based on the values entered in the input portion,
(b) apply each layer's stacking angle ($\theta^k$) to the stress in each layer to convert them to principal direction stress ($[\sigma]^k$) of each layer,
(c) configure the separately entered principal stress direction strength ($[F]^k$) of each layer as a strength discrimination parameter ($[f]^k$) that determines the strength of a multilayer material,
(d) combine the principal direction stress ($[\sigma]^k$) and the strength discrimination parameter ($[f]^k$) of each layer to calculate the safety coefficient of each layer, and
(e) extract the smallest value among the safety coefficients of each calculated layer and defines it as a strength value of a multilayer material.

In a specific exemplary embodiment, defining the strength value of a multilayer material from the calculated safety coefficient of each layer comprises extracting the smallest value of the safety coefficient for each calculated layer, and defining the smallest extracted value as the strength value of the multilayer material if the safety coefficient meets a preset Ultimate Laminate Failure (ULF) criterion.

In an exemplary embodiment, the control portion repeats a cycle including the step (a) to the step (d) n times, wherein the k+1$^{th}$ cycle is performed by applying the value calculated in the k$^{th}$ cycle to the input value, and the strength at break of all n layers forming the multilayer material is selected as the strength of the multilayer material. Here, k is an integer between 1 and n-1, and n is the number of layers comprising the multilayer material.

In another exemplary embodiment, the control portion repeats a cycle including the step (a) to the step (d), and applies the value calculated in the k$^{th}$ cycle to the input value to perform the k+1$^{th}$ cycle, and defines the value calculated in the k$^{th}$ cycle as the strength of the multilayer material if the strength of the multilayer material defined by comparing the value calculated in the k$^{th}$ cycle with the value calculated in the k+1$^{th}$ cycle is no longer increasing. Here, k is an integer between 1 and n-1, and n is the number of layers comprising the multilayer material.

In an exemplary embodiment, the control portion calculating the stress of each layer based on the values entered in the input portion is done by the following steps:

applying the elastic modulus, Poisson's ratio, and Shear modulus of each input layer to derive the stiffness matrix ($[Q]^k$) of each layer;
resetting the stiffness matrix of each layer by reflecting the stacking angle ($\theta^k$) of each layer in the derived stiffness matrix value;
calculating the stiffness matrix of a multilayer material using the reset stiffness matrix value given the thickness ($Z^k$) of each layer;
setting the compliance matrix for the stiffness matrix of the calculated multilayer material;
calculating the mid-plane strain and curvature using a compliance matrix for arbitrary forces (/F) and moments (/M);
calculating the strain of each layer using the calculated mid-plane strain and curvature, and the thickness ($Z^k$) of each layer; and
calculating the stress of each layer by using the strain in each layer and the stiffness matrix ($[Q]^k$) of each layer.

In addition, the present disclosure provides a strength prediction method for a multilayer material.

In an exemplary embodiment, the present invention relates to a strength prediction method for a multilayer material with n films stacked (where n is an integer greater than or equal to 2) including the following the steps:

(a) calculating the stress of each layer by entering one or more of the following: elastic modulus ($E^k$), Poisson's ratio ($\upsilon^k$), shear modulus ($G^k$), thickness ($Z^k$), stacking angle ($\theta^k$), and total thickness (h) of the multilayer material;
(b) applying the stacking angle ($\theta^k$) of each layer to the calculated stresses of each layer to convert it to the principal direction stress ($[\sigma]^k$);
(c) configuring the separately entered principal stress direction strengths ($[F]^k$) of each layer as strength discrimination parameters ($[f]^k$) that determine the strength of the multilayer material;
(d) calculating the safety coefficient of each layer by combining the principal direction stress ($[\sigma]^k$) and the strength discrimination parameter ($[f]^k$) of each layer; and
(e) extracting the smallest value among the safety coefficients of each calculated layer and defining it as the strength value of the multilayer material.

In a specific exemplary embodiment, the step (e) comprises extracting the smallest value among the safety coefficients of each calculated layer, and defining the smallest extracted value as the strength value of the multilayer material if the safety coefficient meets a preset Ultimate Laminate Failure (ULF) criterion.

In an exemplary embodiment, in the present invention, a cycle including the step (a) to the step (d) is repeated n times, wherein the k+1$^{th}$ cycle is performed by applying the value calculated in the k$^{th}$ cycle to the input value, and the strength at break of all n layers forming the multilayer material is selected as the strength of the multilayer material. Here, k is an integer between 1 and n-1, and n is the number of layers comprising the multilayer material.

In another example, in the present invention, a cycle including the step (a) to the step (d) is repeated, wherein the k+1$^{th}$ cycle is performed by applying the value calculated in the k$^{th}$ cycle to the input value, and the value calculated in the k$^{th}$ cycle is defined as the strength of the multilayer material if the strength of the multilayer material defined by comparing the value calculated in the k$^{th}$ cycle with the value calculated in the k+1$^{th}$ cycle is no longer increasing. Here, k is an integer between 1 and n-1, and n is the number of layers comprising the multilayer material.

In one example, the aforementioned calculating the stress of each layer includes the following steps:

deriving the stiffness matrix ($[Q]^k$) of each layer by applying the elastic modulus, Poisson's ratio, and Shear modulus of each input layer;
resetting the stiffness matrix of each layer to reflect the stacking angle ($\theta^k$) of each layer in the derived stiffness matrix value;
calculating the stiffness matrix of a multilayer material using the reset stiffness matrix value, given the thickness

($Z^k$) of each layer;
setting the compliance matrix for the stiffness matrix of the calculated multilayer material;
calculating the mid-plane strain and curvature using a compliance matrix for arbitrary forces ($/F$) and moments ($/M$);
calculating the strain of each layer using the calculated mid-plane strain and curvature, and the thickness ($Z^k$) of each layer; and
calculating the stress of each layer by using the strain in each layer and the stiffness matrix ($[Q]^k$) of each layer.

[Advantageous effects]

According to the present disclosure, a system and method for predicting the strength of a multilayer material can predict the properties of the multilayer material, in particular its strength, without manufacturing a multilayer material specimen.

[Brief Description of the Drawings]

FIG. 1 is a block diagram of a property prediction system for a multilayer material according to a first embodiment of the present invention.
FIGS. 2 and 3 are flowcharts of a method for predicting the strength of a multilayer material, according to one embodiment of the present invention.
FIG. 4 is a schematic diagram illustrating the orientation of a multilayer material.

[Best Mode for Carrying Out the Invention]

The present disclosure provides a strength prediction system for a multilayer material having n films stacked (where n is an integer greater than or equal to 2).
In an exemplary embodiment, a strength prediction system for a multilayer material according to the present invention includes an input portion where one or more of the following is entered: elastic modulus ($E^k$) of each layer (k), Poisson's ratio ($\upsilon^k$), Young's modulus ($G^k$), thickness ($Z^k$), stacking angle ($\theta^k$), principal stress direction strength ($[F]^k$), and total thickness (h) of the multilayer material;

a control portion that calculates the strength of a multilayer material by applying the values entered in the input portion;
a display connected to the control portion; and
a storage portion connected to the control portion.

In addition, the control portion is configured to perform the following steps: (a) calculate the stress of each layer based on the values entered in the input portion, (b) apply each layer's stacking angle ($\theta^k$) to the stress in each layer to convert them to principal direction stress ($[\sigma]^k$) of each layer, (c) configure the separately entered principal stress direction strength ($[F]^k$) of each layer as a strength discrimination parameter ($[f]^k$) that determines the strength of a multilayer material, (d) combine the principal direction stress ($[\sigma]^k$) and the strength discrimination parameter ($[f]^k$) of each layer to calculate the safety coefficient of each layer, and (e) extract the smallest value among the safety coefficients of each calculated layer and defines it as a strength value of a multilayer material.
In addition, the present disclosure provides a strength prediction method for a multilayer material.
In an exemplary embodiment, the present invention relates to a strength prediction method for a multilayer material with n films stacked (where n is an integer greater than or equal to 2) including:

calculating the stress of each layer by entering one or more of the following: elastic modulus ($E^k$), Poisson's ratio ($\upsilon^k$), shear modulus ($G^k$), thickness ($Z^k$), stacking angle ($\theta^k$), and total thickness (h) of the multilayer material (step a);
applying the stacking angle ($\theta^k$) of each layer to the calculated stresses of each layer to convert it to the principal direction stress ($[\sigma]^k$) (step b);
configuring the separately entered principal stress direction strengths ($[F]^k$) of each layer as strength discrimination parameters ($[f]^k$) that determine the strength of the multilayer material (step c);
calculating the safety coefficient of each layer by combining the principal direction stress ($[\sigma]^k$) and the strength discrimination parameter ($[f]^k$) of each layer (step d); and
extracting the smallest value among the safety coefficients of each calculated layer and defining it as the strength value of the multilayer material (step e).

As an example, the process of predicting the strength of a multilayer material in the present disclosure is as follows.

The input information includes one or more of the following: Elastic modulus in the mechanical direction (MD, 1) and Transverse Direction (TD, 2) of each layer (k) ($E^k_{1,2}$), Poisson's ratio in the mechanical direction (1) and Transverse Direction (2) of each layer (k) ($\upsilon^k_{1,2}$), Shear modulus in the mechanical direction (1) and the transverse direction (2) of each layer (k) ($G^k_{1,2}$), an angle ($\theta^k$) of the mechanical direction (1) of each layer (k) with respect to the x-direction of the multilayer material, a thickness ($Z^k$) of each layer (k), and a total thickness (h) of the multilayer material. In addition, the input information includes a principal stress direction strength ($[F]^k$) of each layer.

First, using the input information, calculate the stress ($\sigma^k_{x,y}$) of each layer (k). Then, apply the stacking angle ($\theta^k$) of each layer to the calculated stress ($\sigma^k_{x,y}$) to convert it to the principal direction stress ($[\sigma]^k_{1,2}$) of each layer.

In addition, the principal stress direction strength ($[F]^k_{1,2}$) of each layer entered separately is configured as a strength discrimination parameter ($[f]^k_{1,2}$) to determine the strength of the multilayer material, and the safety coefficient ($S^k_f$) of each layer is calculated by combining the principal direction stress ($[\sigma]^k_{1,2}$) and the strength discrimination parameter ($[f]^k_{1,2}$). For example, the Tsai-Wu criterion can be applied to calculate the safety coefficient ($S^k_f$) of each layer, or the Maximum Stress criterion, Maximum Strain criterion, or Tsai-Hill criterion can be appropriately applied.

The smallest value ($(S^k_f)_{min}$) among the calculated safety coefficient ($S^k_f$) of each layer is extracted and defined as the strength value ($[\overline{F}]^i_{x,y}$) of the multilayer material. Here, the smallest value ($(S^k_f)_{min}$) of the calculated safety coefficient of each layer is defined as the strength value of the multilayer material ($[\overline{F}]^i_{x,y}$), and if this value meets the preset Ultimate Laminate Failure (ULF) criteria, it is defined as the final strength value of the multilayer material ($[\overline{F}]^u_{x,y}$).

The process of extracting the smallest value ($(S^k_f)_{min}$) of the calculated safety coefficient ($S^k_f$) of each layer and defining it as the strength value ($[\overline{F}]^i_{x,y}$) of the multilayer material can be categorized into the following three methods depending on how the ULF criteria is applied.

As in the first method, the aforementioned steps of calculating the stress of each layer (step a) to calculating the safety coefficient of each layer (step d) are repeated once, and the smallest value ($(S^k_f)_{min}$) of the calculated safety coefficient of each layer ($S^k_f$) is extracted and defined as the strength value of the multilayer material ($[\overline{F}]^i_{x,y}$), If the defined strength value ($[\overline{F}]^i_{x,y}$) of the multilayer material meets the preset Ultimate Laminate Failure (ULF) criteria, it is defined as the final strength value of the multilayer material ($[\overline{F}]^u_{x,y}$). In this case, if any of the layers of the multilayer material breaks, the strength reflecting this is selected as the strength value of the final multilayer material.

As in the second method, the aforementioned steps of calculating the stress of each layer (step a) to calculating the safety coefficient of each layer (step d) are repeated n times, but the value calculated in the $k^{th}$ cycle is applied to the input value to perform the $k+1^{th}$ cycle. The strength at break of all n layers forming the multilayer material is defined as the strength value of the multilayer material ($[\overline{F}]^i_{x,y}$), and if this value meets the preset ULF (Ultimate Laminate Failure) criteria, it is defined as the final strength value of the multilayer material ($[\overline{F}]^u_{x,y}$). Here, k is an integer between 1 and n-1, and n is the number of layers comprising the multilayer material. For each cycle, the smallest value ($(S^k_f)_{min}$) of the calculated safety coefficient ($S^k_f$) of each layer is extracted and defined as the strength value ($[\overline{F}]^i_{x,y}$) of the multilayer material in that cycle. In this case, the final strength value of the multilayer material is selected to reflect the strength at which all the layers that make up the multilayer material break.

As in the third method, the step of calculating the stress of each layer (step a) to the step of calculating the safety coefficient of each layer (step d) described above are repeated, but the value calculated in the $k^{th}$ cycle is applied to the input value to perform the $k+1^{th}$ cycle, and if the strength of the multilayer material defined by comparing the value calculated in the $k^{th}$ cycle and the value calculated in the $k+1^{th}$ cycle no longer increases, the value calculated in the $k^{th}$ cycle is defined as the strength of the multilayer material. Here, k is an integer between 1 and n-1, and n is the number of layers comprising the multilayer material. For each cycle, the smallest value ($(S^k_f)_{min}$) of the calculated safety coefficient ($S^k_f$) of each layer is extracted and defined as the strength value ($[\overline{F}]^i_{x,y}$) of the multilayer material in that cycle. In this case, the strength of the layer that bears the maximum load among the layers comprising the multilayer material is selected as the final strength value of the multilayer material.

In another exemplary embodiment, the smallest value ($(S^k_f)_{min}$) of the calculated safety coefficient ($S^k_f$) of each layer is extracted and defined as the strength value ($[\overline{F}]^i_{x,y}$)) of the multilayer material. In this case, the smallest value ($(S^k_f)_{min}$) of the calculated safety coefficient of each layer is defined as the strength value ($[\overline{F}]^i_{x,y}$) of the multilayer material, which can be checked for compliance with a preset Ultimate Laminate Failure (ULF) criterion.

If the value defined as the strength value of the multilayer material ($[\overline{F}]^i_{x,y}$) meets the preset Ultimate Laminate Failure (ULF) criteria, it is defined as the final strength value of the multilayer material ($[\overline{F}]^u_{x,y}$).

Conversely, if the value defined as the strength value of the multilayer material ($[\bar{F}]^i_{x,y}$) does not meet the preset Ultimate Laminate Failure (ULF) criteria, it is recalculated by adjusting the elastic modulus of the broken layer determined in that cycle. As a specific example, the elastic modulus of the broken layer is adjusted by applying a coefficient r to it. For example, in the case of r=0, it is assumed that the broken layer in that cycle has lost its stress-bearing capacity in that direction in the next loading cycle, and in the range of 0<r<1, it is assumed that the broken layer in that cycle has lost some of its stress-bearing capacity in the next loading cycle. At the same time, the strength of the broken layer is changed to infinity so that the same layer does not break in the next loading cycle.

In yet another embodiment, the step of calculating the stress of each layer (step a) is entered with one or more of elastic modulus ($E^k$), Poisson's ratio ($\upsilon^k$), Young's modulus ($G^k$), thickness ($Z^k$), stacking angle ($\theta^k$), and total thickness (h) of the multilayer material, and can be performed as follows.

First, the following information is input: Elastic modulus in the Mechanical direction (MD, 1) and Transverse Direction (TD, 2) of each layer (k) ($E^k_{1,2}$), Poisson's ratio in the Mechanical direction (1) and Transverse Direction (2) of each layer (k) ($\upsilon^k_{1,2}$), Shear modulus in the mechanical direction (1) and transverse direction (2) of each layer (k) ($G^k_{1,2}$), angle ($\theta^k$) of the mechanical direction (1) of each layer (k) to the x-direction of the multilayer material, thickness ($Z^k$) of each layer (k), and total thickness (h) of the multilayer material.

Using the elastic modulus ($E^k_{1,2}$), Poisson's ratio ($\upsilon^k_{1,2}$), and shear modulus ($G^k_{1,2}$), the stiffness matrix ($[Q]^k_{1,2}$) in the mechanical direction (1) and transverse direction (2) of each layer (k) is calculated, a compliance matrix ($[S]^k_{1,2}$) for the stiffness matrix ($[Q]^k_{1,2}$) in the mechanical direction (1) and the transverse direction (2) of each layer (k) is set, the stiffness matrix ($[Q]^k_{1,2}$) of each layer (k) is reset by reflecting the stacking angle ($\theta^k$) of each layer (k) in the stiffness matrix ($[Q]^k_{x,y}$), and the stiffness matrix ($[A]_{x,y}, [B]_{x,y}, [D]_{x,y}$) of the multilayer material is calculated by receiving the thickness ($Z^k$) information of each layer (k) and using the reset stiffness matrix value. Then, a compliance matrix ($[a]_{x,y}, [b]_{x,y}, [c]_{x,y}, [d]_{x,y}$) for the multilayer material stiffness matrix ($[A]_{x,y}, [B]_{x,y}, [D]_{x,y}$) is set.

Then, the compliance matrix for the arbitrary force (/F) and moment (/M) is used to calculate the mid-plane strain and curvature, and the calculated mid-plane strain and curvature, along with the thickness ($Z^k$) of each layer, are used to calculate the strain in each layer.

Specifically, an arbitrary force (/F) and moment (/M) are hypothetical external forces that can be defined using the total thickness value to virtually apply a unit normal stress to a multilayer material.

Using the forces (/N) and moments (/M) and the compliance matrix ($[a]_{x,y}, [b]_{x,y}, [c]_{x,y}, [d]_{x,y}$) for the stiffness matrix ($[A]_{x,y}, [B]_{x,y}, [D]_{x,y}$) of the multilayer material, the mid-plane strains ($\in^0_{x,y}$) and curvatures ($k_{x,y,s}$) are calculated, and using the mid-plane strains ($\in^0_{x,y}$) and curvatures ($k_{x,y,s}$), and the thickness ($Z^k$) of each layer (k), the strain ($\varepsilon^k_{x,y}$) of each layer (k) is calculated, and the stress ($\sigma^k_{x,y}$) of each layer (k) is calculated using the strain and the stiffness matrix ($[Q]^k_{x,y}$) of each layer (k). Then, the stacking angle ($\theta^k$) of each layer is applied to the calculated stress ($\sigma^k_{x,y}$) to convert it to the principal direction stress ($[\sigma]^k_{1,2}$) of each layer.

The following drawings and exemplary embodiments will further illustrate the present invention, but are not intended to be limiting.

**(First embodiment)**

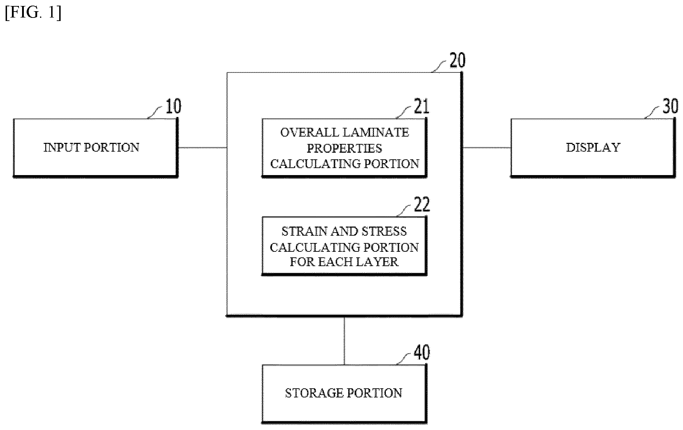

FIG. 1 is a block diagram of a strength prediction system for a multilayer material according to a first embodiment of the present invention.

As shown in FIG. 1, the configuration of the strength prediction system of a multilayer material according to the first embodiment of the present invention is configured by a user who includes: an input portion 10 for entering Elastic modulus of the Mechanical Direction (MD, hereinafter referred to as "1" and meaning principal direction) and the Transverse Direction (TD, hereinafter referred to as "2") of each layer (k) ($E^k_{1,2}$), Poisson's ratio of the mechanical direction (1) and the transverse direction (2) of each layer (k) ($\upsilon^k_{1,2}$), Shear modulus of the mechanical direction (1) and the transverse direction (2) of each layer (k) ($G^k_{1,2}$), angle of the mechanical direction (1) of each layer (k) with respect to the x-direction of the multilayer material ($\theta^k$), thickness ($Z^k$) of each layer (k), and the like, a physical property output portion 21, 22, a control portion 20 connected to the input portion 10, a display 30 connected to the control portion 20, and a storage portion 40 connected to the control portion 20.

In the present dislcosure, the term multilayer material refers to a laminate having a stacked structure of two or more materials, which can mean a multilayer film of a polymer or the like, a composite material of dissimilar materials such as fiber reinforced plastics (FRP) and an aluminum pouch, or the like. For example, the multilayer material may refer to a multilayer film.

**(Second embodiment)**

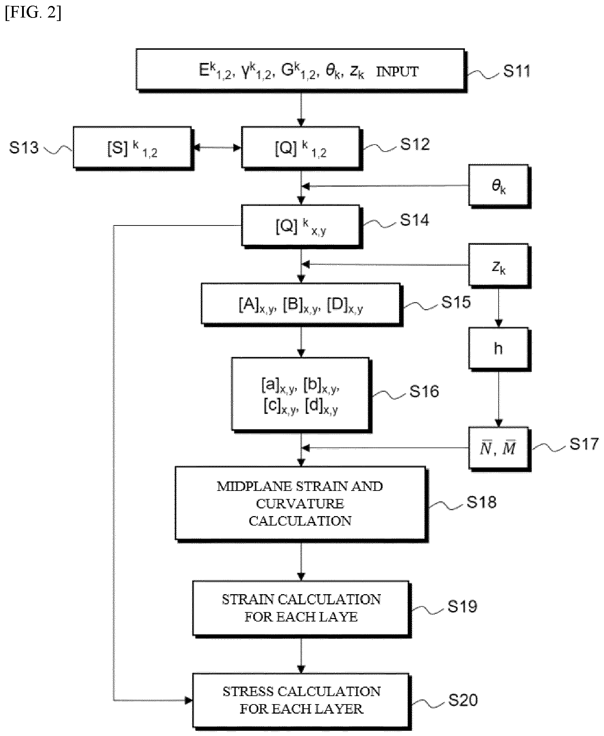

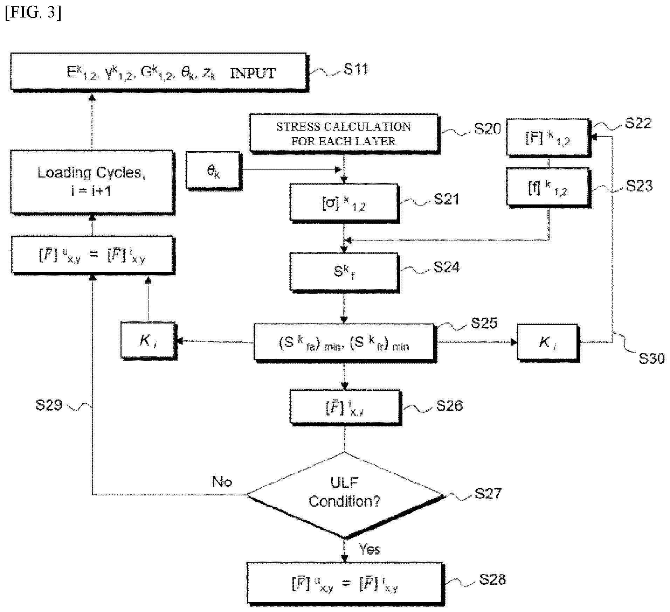

FIGS. 2 and 3 are flowcharts of a method for predicting the strength of a multilayer material, according to one embodiment of the present invention.

Referring to FIG. 2, in a multilayer material having two or more materials stacked,

Elastic modulus in the mechanical direction (1) and transverse direction (2) of each layer (k) ($E^k_{1,2}$), Poisson's ratio in the mechanical direction (1) and transverse direction (2) of each layer (k) ($\upsilon^k_{1,2}$), Shear modulus in the mechanical direction (1) and transverse direction (2) of each layer (k) ($G^k_{1,2}$), angle of each layer in the mechanical direction (1) with respect to the x-direction of the multilayer material ($\theta^k$), and thickness of each layer (k) ($Z^k$) are entered (S 1 1).

Using the above elastic modulus ($E^k_{1,2}$), Poisson's ratio ($\upsilon^k_{1,2}$), and shear modulus ($G^k_{1,2}$), the stiffness matrix ($[Q]^k_{1,2}$) in the mechanical direction (1) and transverse direction (2) of each layer (k) is calculated as shown in the following Equation 1 (S12).

$$
\begin{bmatrix} \sigma_1 \\ \sigma_2 \\ \tau_6 \end{bmatrix} = \begin{bmatrix} Q_{11} & Q_{12} & 0 \\ Q_{12} & Q_{22} & 0 \\ 0 & 0 & Q_{66} \end{bmatrix} \begin{bmatrix} \varepsilon_1 \\ \varepsilon_2 \\ \gamma_6 \end{bmatrix}
$$

$$
Q_{11} = \frac{E_1}{1 - v_{12}v_{21}} \quad Q_{22} = \frac{E_2}{1 - v_{12}v_{21}}
$$

$$
Q_{12} = Q_{21} = \frac{v_{21}E_1}{1 - v_{12}v_{21}} = \frac{v_{12}E_2}{1 - v_{12}v_{21}}
$$

$$
Q_{66} = G_{12'} \tag{1}
$$

(For an isotropic material, G = E / 2(1+$\upsilon$))

A compliance matrix ($[S]^k_{1,2}$) for the stiffness matrix ($[Q]^k_{1,2}$) in the mechanical direction (1) and transverse direction (2) of each layer (k) calculated in this way is set (S13).

Reflecting the stacking angle ($\theta^k$) of each layer (k) in the stiffness matrix ($[Q]^k_{1,2}$) derived above, the stiffness matrix ($[Q]^k_{x,y}$) of each layer (k) is reset as shown in the following Equation 2 (S14).

$$
[T] = \begin{bmatrix} m^2 & n^2 & 2mn \\ n^2 & m^2 & -2mn \\ -mn & mn & m^2 - n^2 \end{bmatrix} \quad m = \cos\theta, n = \sin\theta
$$

$$
\begin{bmatrix} Q_{xx} & Q_{xy} & 2Q_{xs} \\ Q_{xy} & Q_{yy} & 2Q_{ys} \\ Q_{xs} & Q_{ys} & 2Q_{ss} \end{bmatrix} = [T^{-1}] \begin{bmatrix} Q_{11} & Q_{12} & 0 \\ Q_{12} & Q_{22} & 0 \\ 0 & 0 & 2Q_{66} \end{bmatrix} [T^{-1}]
$$

$$
\begin{bmatrix} Q_x \\ Q_y \\ \tau_s \end{bmatrix} = \begin{bmatrix} Q_{xx} & Q_{xy} & Q_{xs} \\ Q_{xy} & Q_{yy} & Q_{ys} \\ Q_{xs} & Q_{ys} & Q_{ss} \end{bmatrix} \begin{bmatrix} \varepsilon_x \\ \varepsilon_y \\ \gamma_s \end{bmatrix} \quad \begin{matrix} \text{stress-strain relation(dir-x,y)} \\ \text{reflecting the angle} \end{matrix}
$$

$$
\tag{2}
$$

Using the thickness information of each layer (k) and the reset stiffness matrix value, the stiffness matrix of the entire laminate, the multilayer material ($[A]_{x,y}$, $[B]_{x,y}$, $[D]_{x,y}$), is calculated as follows (S15).

$$
A_{ij} = \sum_{k=1}^{n} Q_{ij}^k (z_k - z_{k-1}) \qquad B_{ij} = \frac{1}{2} \sum_{k=1}^{n} Q_{ij}^k (z_k^{\wedge}2 - z_{k-1} \wedge 2)
$$

$$
D_{ij} = \frac{1}{3} \sum_{k=1}^{n} Q_{ij}^k (z_k^{\wedge}3 - z_{k-1} \wedge 3) \qquad \begin{matrix} \text{subscript } k \text{ stands for each layer,} \\ \text{totaling } n \text{ layers} \end{matrix}
$$

$$
\tag{3}
$$

A compliance matrix ($[a]_{x,y}$, $[b]_{x,y}$, $[c]_{x,y}$, $[d]_{x,y}$) for the stiffness matrix of the multilayer material ($[A]_{x,y}$, $[B]_{x,y}$, $[D]_{x,y}$), which is the entire laminate calculated in this way, is set as shown in the following Equation 4 (S 16).

$$\begin{bmatrix} A_{xx} & A_{xy} & A_{xs} & B_{xx} & B_{xy} & B_{xs} \\ A_{yx} & A_{yy} & A_{yx} & B_{yx} & B_{yy} & B_{yx} \\ A_{sx} & A_{sy} & A_{ss} & B_{sx} & B_{sy} & B_{ss} \\ B_{xx} & B_{xy} & B_{xs} & D_{xx} & D_{xy} & D_{xs} \\ B_{yx} & B_{yy} & B_{ys} & D_{yx} & D_{yy} & D_{ys} \\ B_{sx} & B_{sy} & B_{ss} & D_{sx} & D_{sy} & D_{ss} \end{bmatrix}^{-1} = \begin{bmatrix} a_{xx} & a_{xy} & a_{xs} & b_{xx} & b_{xy} & b_{xs} \\ a_{yx} & a_{yy} & a_{yx} & b_{yx} & b_{yy} & b_{yx} \\ a_{sx} & a_{sy} & a_{ss} & b_{sx} & b_{sy} & b_{ss} \\ c_{xx} & c_{xy} & c_{xs} & d_{xx} & d_{xy} & d_{xs} \\ c_{yx} & c_{yy} & c_{ys} & d_{yx} & d_{yy} & d_{ys} \\ c_{sx} & c_{sy} & c_{ss} & d_{sx} & d_{sy} & d_{ss} \end{bmatrix} \quad (4)$$

In the present invention, in order to virtually apply a unit normal stress to the entire multilayer material, the total thickness value can be used to define the following Equation 5 or Equation 6 (S17). Here, Equation 5 is applied to find the strength in the x-direction of the multilayer material, and Equation 6 is applied to find the strength in the y-direction of the multilayer material.

$$\begin{bmatrix} \bar{N}_x \\ \bar{N}_y \\ \bar{N}_S \\ \bar{M}_x \\ \bar{M}_y \\ \bar{M}_S \end{bmatrix} = \begin{bmatrix} h \\ 0 \\ 0 \\ 0 \\ 0 \\ 0 \end{bmatrix} \quad (5)$$

$$\begin{bmatrix} \bar{N}_x \\ \bar{N}_y \\ \bar{N}_S \\ \bar{M}_x \\ \bar{M}_y \\ \bar{M}_s \end{bmatrix} = \begin{bmatrix} 0 \\ h \\ 0 \\ 0 \\ 0 \\ 0 \end{bmatrix} \quad (6)$$

Using the input total force ($/N$) and total moment ($/M$) and the compliance matrix ($[a]_{x,y}$, $[b]_{x,y}$, $[c]_{x,y}$, $[d]_{x,y}$) for the stiffness matrix ($[A]_{x,y}$, $[B]_{x,y}$, $[D]_{x,y}$), which is the entire laminate, the strains ($\in^0_{x,y}$) and curvatures ($k_{x,y,s}$) of the mid-plane are calculated as in Equation 7 (S 18).

$$\begin{bmatrix} \epsilon_x^0 \\ \epsilon_y^0 \\ \gamma_s^0 \\ k_x \\ k_y \\ k_s \end{bmatrix} = \begin{array}{c} \overset{A}{\phantom{a}} \qquad\qquad \overset{B}{\phantom{a}} \\ \left[\begin{array}{ccc|ccc} a_{xx} & a_{xy} & a_{xx} & b_{xx} & b_{xy} & b_{xx} \\ a_{yx} & a_{yy} & a_{ys} & b_{yx} & b_{yy} & b_{ys} \\ a_{sx} & a_{sy} & a_{ss} & b_{sx} & b_{sy} & b_{ss} \\ \hline c_{xx} & c_{xy} & c_{xx} & d_{xx} & d_{xy} & d_{xx} \\ c_{yx} & c_{yy} & c_{ys} & d_{yx} & d_{yy} & d_{ys} \\ c_{sx} & c_{sy} & c_{ss} & d_{sx} & d_{sy} & d_{ss} \end{array}\right] \\ \underset{C}{\phantom{a}} \qquad\qquad \underset{D}{\phantom{a}} \end{array} \begin{bmatrix} \bar{N}_x \\ \bar{N}_y \\ \bar{N}_s \\ \bar{M}_x \\ M_y \\ M_s \end{bmatrix} \quad (7)$$

Using the strain ($\in^0_{x,y}$) and curvature ($k_{x,y,s}$) of the mid-plane and the thickness ($Z^k$) of each layer (k) entered through the input portion, the strain ($\varepsilon^k_{x,y}$) of each layer (k) is calculated as shown in the following Equation 8 (S19),

$$\begin{bmatrix} \boldsymbol{\varepsilon}_x \\ \boldsymbol{\varepsilon}_y \\ \boldsymbol{\gamma}_s \end{bmatrix}_k = \begin{bmatrix} \epsilon_x^0 \\ \epsilon_y^0 \\ \gamma_s^0 \end{bmatrix} + z_k \begin{bmatrix} k_x \\ k_y \\ k_s \end{bmatrix} \tag{8}$$

Using the strain of each layer (k) and the stiffness matrix of each layer (k) ($[Q]^k_{x,y}$), the stress ($\sigma^k_{x,y}$) of each layer (k) is calculated as shown in the following Equation 9 (S20).

$$\begin{bmatrix} \sigma_x \\ \sigma_y \\ \tau_s \end{bmatrix}_k = \begin{bmatrix} Q_{xx} & Q_{xy} & Q_{xs} \\ Q_{xy} & Q_{yy} & Q_{ys} \\ Q_{xs} & Q_{ys} & Q_{ss} \end{bmatrix}_k \begin{bmatrix} \varepsilon_x \\ \varepsilon_y \\ \gamma_s \end{bmatrix}_k \tag{9}$$

Next, referring to FIG. 3, the calculated stress ($\sigma^k_{x,y}$) of each layer (k) is converted into the principal direction stress ($[\sigma]^k_{1,2}$) of each layer using the layer-specific angle ($\theta^k$) information (S21). Here, the following Equation 10 is used.

$$[T] = \begin{bmatrix} m^2 & n^2 & 2mn \\ n^2 & m^2 & -2mn \\ -mn & mn & m^2 - n^2 \end{bmatrix} m = \cos\theta, n = \sin\theta$$

$$\begin{bmatrix} \sigma_1 \\ \sigma_2 \\ \tau_6 \end{bmatrix}_k = [T] \begin{bmatrix} \sigma_x \\ \sigma_y \\ \tau_s \end{bmatrix}_k \tag{10}$$

Separately, the principal stress direction strength ($[F]^k_{1,2}$) of each layer (k) is entered, for example, as follows (S22).

First direction tensile strength of each layer (k): $F^k_{1t}$, First direction compressive strength: $F^k_{1c}$

Second direction tensile strength of each layer (k): $F^k_{2t}$, Second direction compressive strength: $F^k_{2c}$

Sixth direction tensile strength of each layer (k): $F^k_6$, First-Second direction biaxial tensile strengths: $F^k_{12}$

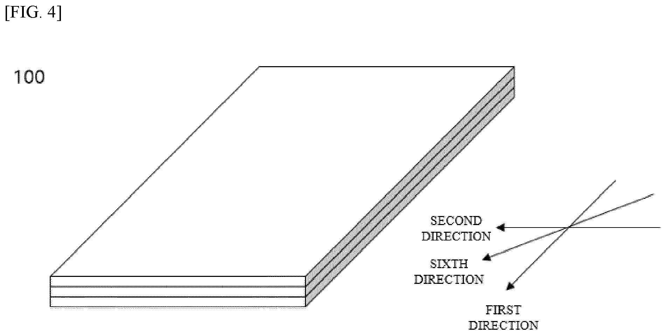

Here, the direction of each layer is as shown in FIG. 4. Referring to FIG. 4, the mechanical direction of the multilayer material 100 is set to First or x-direction, the transverse direction is set to Second or y-direction, and the diagonal direction is set to Sixth or s-direction.

Using the input strength of each layer (k), the parameters for determining the strength of the entire multilayer material are configured as shown in Equation 11 below (S23). Equation 11 below is an example of applying the Tsai-Wu criterion.

$$[f]^k = [f_1 f_2 f_{11} f_{22} f_{66} f_{12}]^k$$

$$f_1 = \frac{1}{F_{1t}} - \frac{1}{F_{1c}} \quad f_2 = \frac{1}{F_{2t}} - \frac{1}{F_{2c}}$$

$$f_{11} = \frac{1}{F_{1t}F_{1c}} \quad f_{22} = \frac{1}{F_{2t}F_{2c}} \quad f_{66} = \frac{1}{F_6^2}$$

$$f_{12} = \frac{1}{2F_{(12)}^2} \left[1 - F_{(12)}(f_1 + f_2) - F_{(12)}^2(f_{11} + f_{22})\right] \tag{11}$$

Here, if the experimental biaxial tensile strength is not available, it can be assumed as shown in Equation 12 below.

$$f_{12} \cong -\frac{1}{2}(f_{11}f_{22})^{1/2} \tag{12}$$

Using the principal direction stress ($[\sigma]^k_{1,2}$) and the strength discrimination parameter ($[f]^k_{1,2}$) of each layer, the safety coefficient ($S^k_f$) of each layer is calculated (S24). For example, applying the Tsai-Wu criterion method, the safety coefficient is calculated as shown in Equation 13 below.

$$aS_f^2 + bS_f - 1 = 0$$
$$a = f_{11}\sigma_1^2 + f_{22}\sigma_2^2 + f_{66}\tau_6^2 + 2f_{12}\sigma_1\sigma_2$$
$$b = f_1\sigma_1 + f_2\sigma_2 \qquad (13)$$

Solving the quadratic equation in Equation 12, two solutions for each layer (k) safety coefficient ($S^k_f$) can be obtained, where the positive value ($S^k_{fa}$) represents the tensile strength and the negative value ($S^k_{fr}$) represents the compressive strength. By comparing the safety coefficient of each layer, the layer ($k_i$) that exhibits the smallest safety coefficient can be defined as the broken layer (S25).

Here, the safety coefficient of the broken layer can be defined as the strength value ($[\bar{F}]^i_{x,y}$) at the corresponding loading cycle (i) (S26). In this case, if a unit normal stress has been applied by Equation 5 in the previous step S17, the strength in the x-direction of the multilayer material is derived by Equation 14.

$$[\bar{F}]^i_{Xt} = \left(S^{k_i}_{fa}\right)_{\min} \quad \text{tensile strength}$$
$$[\bar{F}]^i_{XC} = \left(S^{ki}_{fr}\right)_{\min} \quad \text{compressive strength} \qquad (14)$$

Furthermore, if a unit normal stress is applied by Equation 6 in the previous step S 17, the y-direction strength of the multilayer material is derived by Equation 15.

$$[\bar{F}]^i_{yt} = \left(S^{k_i}_{fa}\right)_{\min} \quad \text{tensile strength}$$
$$[\bar{F}]^i_{yc} = \left(S^{k_i}_{fr}\right)_{\min} \quad \text{compressive strength} \qquad (15)$$

If the result of that loading cycle meets the preset Ultimate Laminate Failure (ULF) criteria (S27), the defined strength value ($[\bar{F}]^i_{x,y}$) is determined as the final strength of the multilayer material ($[\bar{F}]^u_{x,y}$) (S28).

If the ULF criterion is not met, the entire algorithm cycle is reapplied by performing steps S29 and S30.

Here, the ULF criterion is applicable by selecting any one of Examples 1 to 3 below (S27).

(Example 1) Loading cycle (i=1), when any one of the layers comprising the multilayer material breaks, the corresponding strength is selected as the final strength of the multilayer material.

(Example 2) Loading cycle (i=n), when all layers (n) forming the multilayer material have been completely broken, the corresponding strength is selected as the final strength of the multilayer material.

(Example 3) When comparing the result of the $i^{th}$ loading cycle with the result of the $i+1^{th}$ loading cycle, if the strength does not increase, the strength selected in the $i^{th}$ loading cycle is selected as the final strength.

If the strength value of the multilayer material defined in S26 ($[\bar{F}]^i_{x,y}$) does not meet the ULF criteria, it is recalculated by adjusting the elastic modulus of the broken layer determined in the corresponding cycle (i) (S29). In this case, a factor r is applied to the elastic modulus of the broken layer to adjust it. For example, in the case of r=0, it is assumed that the broken layer in that cycle has lost its stress-bearing capacity in that direction in the next loading cycle, and in the case of 0<r<1, it is assumed that the broken layer in that cycle has lost some of its stress-bearing capacity in the next loading cycle.

At the same time, the strength of the broken layer is changed to infinity so that the same layer does not break in the next loading cycle (S30).

**(Third embodiment)**

In yet another exemplary embodiment of the present invention, if the inputs to the input portion are not immediately available, they can be derived through a conversion process using other property values.

In one exemplary embodiment, the elastic modulus ($E^k$) of each layer (k) and the Poisson's ratio ($\upsilon^k$) of each

layer (k) can be calculated from one or more of the following physical properties: first Lame constant ($\lambda^k$), shear modulus ($G^k$), and volumetric elastic modulus ($K^k$). For example, the elastic modulus ($E^k$) and Poisson's ratio ($\upsilon^k$) can be converted using Equations 1 through 9 below.

If the obtainable combination is ($\lambda^k$, $G^k$), then it is according to Equation 1 below.

[Equation 1]

$$E^k = \frac{G^k\left(3\lambda^k + 2G^k\right)}{\left(\lambda^k + G^k\right)} \quad , \quad v^k = \frac{\lambda^k}{2\left(\lambda^k + G^k\right)}$$

If the obtainable combination is ($\lambda^k$, $E^k$), then it is according to Equation 2.

[Equation 2]

$$v^k = \frac{A - \left(E^k + \lambda^k\right)}{4\lambda^k} \quad , \quad E^k$$

If the obtainable combination is ($\lambda^k$, $\upsilon^k$), then it is according to Equation 3.

[Equation 3]

$$E^k = \frac{\lambda^k\left(1 + \lambda^k\right)\left(1 - 2\lambda^k\right)}{\lambda^k} \quad , \quad v^k$$

If the obtainable combination is ($\lambda^k$, $K^k$), then it is according to Equation 4.

[Equation 4]

$$E^k = \frac{9K^k\left(k^k - \lambda^k\right)}{3K^k - \lambda^k} \quad , \quad v^k = \frac{\lambda^k}{3k^k - \lambda^k}$$

If the obtainable combination is ($G^k$, $E^k$), then it is according to Equation 5.

[Equation 5]

$$v^k = \frac{E - 2G}{2G^k} \quad , \quad E^k$$

If the obtainable combination is ($G^k$, $\upsilon^k$), then it is according to Equation 6.

[Equation 6]

$$E^k = 2G^k\left(1 + v^k\right) \quad , \quad v^k$$

If the obtainable combination is ($G^k$, $K^k$), then it is according to Equation 7.

[Equation 7]

$$E^k = \frac{9K^k G^k}{3K^k + G^k} \quad , \quad V^k = \frac{3K^k - 2G^k}{2(3K^k + G^k)}$$

If the obtainable combination is ($K^k$, $E^k$), then it is according to Equation 8.

[Equation 8]

$$v^k = \frac{3K^k - E^k}{6K^k} \quad , \quad E^k$$

If the obtainable combination is ($K^k$, $v^k$), then it is according to Equation 9.

[Equation 9]

$$E^k = 3K^k \left(1 - 2V^k\right) \quad , \quad v^k$$

Equations 1 through 9 above are examples, and two or more equations can be combined as needed.

[Reference numerals]

10: INPUT PORTION

20: CONTROL PORTION

21: OVERALL LAMINATE PROPERTIES CALCULATING PORTION

22: EXPANSION COEFFICIENT AND DISTORTION CALCULATING PORTION

30: DISPLAY

40: STORAGE PORTION

100: MULTILAYER MATERIAL

**Claims**

1. A strength prediction system for a multilayer material with n films stacked, wherein n is an integer greater than or equal to 2, comprising:

an input portion configured to accept one or more values; wherein the values include an elastic modulus of each layer, a Poisson's ratio, a Young's modulus, a thickness, a stacking angle, a principal stress direction strength, and a total thickness of a multilayer material;
a control portion configured to calculate a strength of a multilayer material by applying the values entered in the input portion;
a display connected to the control portion; and
a storage portion connected to the control portion,

**13**

wherein the control portion is configured to perform a cycle including: (a) calculating a stress of each layer based on the values entered in the input portion, (b) applying each layer's stacking angle to the stress in each layer to convert them to a principal direction stress of each layer, (c) configuring the separately entered principal stress direction strength of each layer as a strength discrimination parameter that determines the strength of a multilayer material, (d) combining the principal direction stress and the strength discrimination parameter of each layer to calculate a safety coefficient of each layer, and wherein the control portion is configured to extract a smallest value among the safety coefficients of each calculated layer and define the smallest value as a strength value of a multilayer material.

2. The strength prediction system for the multilayer material of claim 1, wherein
the smallest value among the safety coefficients of each calculated layer is defined as the smallest extracted value as the strength value of the multilayer material if the safety coefficient meets a preset Ultimate Laminate Failure (ULF) criterion.

3. The strength prediction system for the multilayer material of claim 1, wherein

the control portion is configured to repeat the cycle including the steps (a) to (d) n times, wherein a $k+1^{th}$ cycle is performed by applying a value calculated in a $k^{th}$ cycle to an input value, and a strength at break of all n layers forming the multilayer material is selected as the strength of the multilayer material, wherein
k is an integer between 1 and n-1, and n is the number of layers comprising the multilayer material.

4. The strength prediction system for the multilayer material of claim 1, wherein

the control portion is configured to repeat the cycle including the steps (a) to (d), and
apply a value calculated in a $k^{th}$ cycle to an input value to perform a $k+1^{th}$ cycle, and defines the value calculated in the $k^{th}$ cycle as a strength of the multilayer material if the strength of the multilayer material defined by comparing the value calculated in the $k^{th}$ cycle with the value calculated in the $k+1^{th}$ cycle is no longer increasing, wherein
k is an integer between 1 and n-1, and n is the number of layers comprising the multilayer material.

5. The strength prediction system for the multilayer material of claim 1, wherein

the control portion is configured to calculate the stress of each layer based on the values entered in the input portion by
applying an elastic modulus, a Poisson's ratio, and a Shear modulus of each input layer to derive a stiffness matrix of each layer;
resetting the stiffness matrix of each layer by reflecting the stacking angle of each layer in the derived stiffness matrix value;
calculating the stiffness matrix of a multilayer material using the reset stiffness matrix value given the thickness of each layer;
setting a compliance matrix for the calculated stiffness matrix of a multilayer material;
calculating a mid-plane strain and a curvature using the compliance matrix for arbitrary forces and moments;
calculating a strain of each layer using the calculated mid-plane strain and curvature, and a thickness of each layer; and
calculating the stress of each layer by using the strain in each layer and the stiffness matrix of each layer.

6. A strength prediction method for a multilayer material with n films stacked, wherein n is an integer greater than or equal to 2, comprising:

(a) calculating a stress of each layer by entering one or more of the following values: an elastic modulus, a Poisson's ratio, a shear modulus, a thickness, a stacking angle, and a total thickness of a multilayer material;
(b) applying a stacking angle of each layer to the calculated stresses of each layer to convert it to a principal direction stress;
(c) configuring a separately entered principal stress direction strength of each layer as a strength discrimination parameter that determines a strength of the multilayer material;
(d) calculating a safety coefficient of each layer by combining the principal direction stress and the strength discrimination parameter of each layer; and

extracting a smallest value among the safety coefficients of each calculated layer and defining the smallest value as a strength value of the multilayer material.

7. The strength prediction method for a multilayer material of claim 6, wherein the smallest value among the safety coefficients of each calculated layer is defined as the strength value of the multilayer material if the safety coefficient meets a preset Ultimate Laminate Failure (ULF) criterion.

8. The strength prediction method for a multilayer material of claim 6, further comprising:

repeating the steps (a) to (d) is repeated n times, wherein
a $k+1^{th}$ cycle is performed by applying a value calculated in a $k^{th}$ cycle to an input value, and a strength at break of all n layers forming the multilayer material is selected as the strength of the multilayer material, wherein
k is an integer between 1 and n-1, and n is the number of layers comprising the multilayer material.

9. The strength prediction method for a multilayer material of claim 6, further comprising:

repeating the steps (a) to (d), wherein
a $k+1^{th}$ cycle is performed by applying a value calculated in a $k^{th}$ cycle to an input value, and
the value calculated in the $k^{th}$ cycle is defined as the strength of the multilayer material if the strength of the multilayer material defined by comparing the value calculated in the $k^{th}$ cycle with the value calculated in the $k+1^{th}$ cycle is no longer increasing, wherein
k is an integer between 1 and n-1, and n is the number of layers comprising the multilayer material.

10. The strength prediction method for a multilayer material of claim 6, wherein
the calculating the stress of each layer further comprises:

deriving a stiffness matrix of each layer by applying an elastic modulus, a Poisson's ratio, and a Shear modulus of each input layer;
resetting the stiffness matrix of each layer to reflect the stacking angle of each layer in the derived stiffness matrix value;
calculating the stiffness matrix of a multilayer material using the reset stiffness matrix value, given the thickness of each layer;
setting a compliance matrix for the calculated stiffness matrix of a multilayer material;
calculating a mid-plane strain and a curvature using the compliance matrix for arbitrary forces and moments;
calculating a strain of each layer using the calculated mid-plane strain and curvature, and the thickness of each layer; and
calculating the stress of each layer by using the strain in each layer and the stiffness matrix of each layer.

[FIG. 1]

[FIG. 2]

[FIG. 3]

$E^k_{1,2}, \gamma^k_{1,2}, G^k_{1,2}, \theta_k, z_k$    INPUT    S11

STRESS CALCULATION FOR EACH LAYER   S20

$[F]^k_{1,2}$   S22

$[f]^k_{1,2}$   S23

Loading Cycles, $i = i+1$

$\theta_k$

$[\sigma]^k_{1,2}$   S21

$[\bar{\bar{F}}]^u_{x,y} = [\bar{\bar{F}}]^i_{x,y}$

$S^k_f$   S24

$K_i$

$(S^k_{fa})_{min}, (S^k_{fr})_{min}$   S25

$K_i$   S30

$[\bar{\bar{F}}]^i_{x,y}$   S26

S29

No   ULF Condition?   S27

Yes

$[\bar{F}]^u_{x,y} = [\bar{F}]^i_{x,y}$   S28

[FIG. 4]

100

SECOND
DIRECTION

SIXTH
DIRECTION

FIRST
DIRECTION

## INTERNATIONAL SEARCH REPORT

| | International application No. |
|---|---|
| | **PCT/KR2023/007530** |

### A. CLASSIFICATION OF SUBJECT MATTER

**G01N 3/08**(2006.01)i

According to International Patent Classification (IPC) or to both national classification and IPC

### B. FIELDS SEARCHED

Minimum documentation searched (classification system followed by classification symbols)

G01N 3/08(2006.01); B60C 19/00(2006.01); G01L 1/00(2006.01); G01N 3/42(2006.01); G06F 17/10(2006.01); G06F 17/50(2006.01); G06F 19/00(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다층 소재(multilayered material), 강도(strength), 예측(prediction), 포아송 비 (Poisson's ratio), 쉬어 모듈러스(shear modulus), 탄성 모듈러스(elastic modulus), 두께(thickness), 적층 강도(deposition strength), 강도 판별 파라미터(strength-determining parameter), 응력(stress), 안전계수(safety factor)

### C. DOCUMENTS CONSIDERED TO BE RELEVANT

| Category* | Citation of document, with indication, where appropriate, of the relevant passages | Relevant to claim No. |
|---|---|---|
| A | KR 10-2012-0082112 A (KOREA AEROSPACE INDUSTRIES, LTD.) 23 July 2012 (2012-07-23)<br>See abstract, paragraphs [0002]-[0012] and [0036]-[0055], claim 1 and figure 1. | 1-10 |
| A | JP 2007-004552 A (TOYOTA MOTOR CORP. et al.) 11 January 2007 (2007-01-11)<br>See abstract, paragraphs [0023]-[0041], claim 1 and figure 1. | 1-10 |
| A | JP 2013-097521 A (TORAY IND. INC.) 20 May 2013 (2013-05-20)<br>See paragraphs [0035]-[0068], claim 1 and figures 1-7. | 1-10 |
| A | KR 10-2016-0119393 A (INDUSTRY-ACADEMIC COOPERATION FOUNDATION, YONSEI UNIVERSITY) 13 October 2016 (2016-10-13)<br>See paragraphs [0038]-[0103], claims 1-13 and figures 1-8. | 1-10 |
| A | JP 2004-093530 A (THE YOKOHAMA RUBBER CO., LTD.) 25 March 2004 (2004-03-25)<br>See paragraphs [0010]-[0035], claims 1-4 and figures 1-8. | 1-10 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 September 2023** | **07 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/007530**

| Patent document cited in search report | | | Publication date (day/month/year) | Patent family member(s) | | | Publication date (day/month/year) |
|---|---|---|---|---|---|---|---|
| KR | 10-2012-0082112 | A | 23 July 2012 | KR | 10-1102307 | B1 | 05 January 2012 |
| | | | | KR | 10-1200167 | B1 | 13 November 2012 |
| | | | | KR | 10-2010-0119055 | A | 09 November 2010 |
| JP | 2007-004552 | A | 11 January 2007 | JP | 4459120 | B2 | 28 April 2010 |
| JP | 2013-097521 | A | 20 May 2013 | None | | | |
| KR | 10-2016-0119393 | A | 13 October 2016 | KR | 10-1677840 | B1 | 21 November 2016 |
| JP | 2004-093530 | A | 25 March 2004 | JP | 4081330 | B2 | 23 April 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220071405